# EUROPÄISCHE PATENTSCHRIFT

(11) **EP 3 577 667 B1**
(45) Veröffentlichungstag und Bekanntmachung des Hinweises auf die Patenterteilung: **08.03.2023**
(21) Anmeldenummer: 17711634.0
(22) Anmeldetag: 16.03.2017
(51) Int. Cl.: H01F 27/30

(54) **TRANSFORMATOR FÜR EINEN GLEICHSPANNUNGSWANDLER**
TRANSFORMER FOR A DC-DC CONVERTER
TRANSFORMATEUR POUR CONVERTISSEUR CONTINU-CONTINU

(43) Veröffentlichungstag der Anmeldung: 11.12.2019
(73) Patentinhaber: Siemens Aktiengesellschaft, 80333 München (DE)
(72) Erfinder: LUTZE, Marcel, 90459 Nürnberg (DE); PFEIFER, Markus, 90455 Nürnberg (DE)
(74) Vertreter: Siemens Patent Attorneys
(86) Internationale Anmeldenummer: PCT/EP2017/056255
(87) Internationale Veröffentlichungsnummer: WO 2018/166601

(56) Entgegenhaltungen:
- EP-A1- 1 248 355
- DE-A1-102013 007 850
- DE-T5-112010 005 649

## Beschreibung

Die Erfindung betrifft einen Transformator für einen Gleichspannungswandler, insbesondere einen Resonanzwandler.

Ein Gleichspannungswandler mit zwei Brückenschaltungen und einem dazwischen angeordneten Transformator ermöglicht die Anbindung sowohl von Erzeugungseinheiten, z.B. Windenergieanlagen, Fotovoltaik-Anlagen, Speichersysteme, Batterieladegeräte, usw., ebenso wie die Anbindung von elektrischen Lasten, wie z.B. Antriebe an Gleichspannungsnetzen. Durch einen Gleichspannungswandler können Gleichspannungsnetze gleicher und auch unterschiedlicher Spannung verbunden werden. Eine galvanische Trennung wird durch den zwischen den zwei Brückenschaltungen angeordneten Transformator sichergestellt.

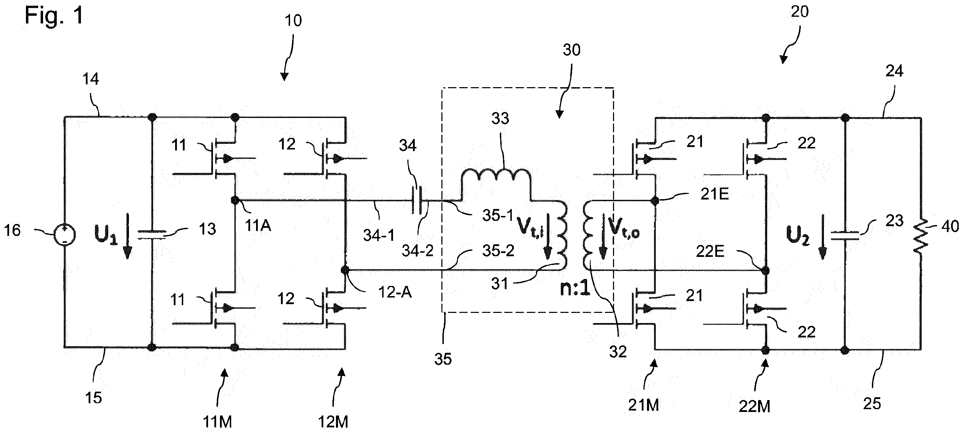

Fig. 1 zeigt eine schematische Darstellung eines bekannten Gleichspannungswandlers. Der Gleichspannungswandler weist eine erste Brückenschaltung 10 auf, mit der eine erste Gleichspannung U₁ einer Gleichspannungsquelle 16 in eine Wechselspannung transformiert wird. Die erste Gleichspannung U₁ liegt zwischen einem ersten Versorgungspotentialanschluss 14 und einem Bezugspotentialanschluss 15 an. Die Gleichspannungsquelle 16 kann beispielsweise eine der oben genannten Erzeugungseinheiten (Windenergieanlage, Fotovoltaik-Anlage, Speichersystem, Batterieladegerät, usw.) sein. Die durch die erste Brückenschaltung 10 erzeugte Wechselspannung wird durch einen Transformator 30 transformiert, der ein vorgegebenes Übersetzungsverhältnis n:1 aufweist. Die mittels des Transformators generierte Wechselspannung wird mittels einer nachfolgenden zweiten Brückenschaltung 20 wieder in eine Gleichspannung U₂ umgewandelt. Die zweite Gleichspannung U₂ liegt zwischen einem zweiten Versorgungspotentialanschluss 24 und einem zweiten Bezugspotentialanschluss 25 an. Dadurch kann die an der Eingangsseite des Gleichspannungswandlers anliegende Gleichspannung U₁ in eine andere Gleichspannung U₂ zur Versorgung einer Last 40 auf der Ausgangsseite umgewandelt werden. Sowohl die erste als auch die zweite Brückenschaltung 10, 20 weisen zwischen dem jeweiligen Versorgungspotentialanschluss 14, 24 und dem jeweiligen Bezugspotentialanschluss 15 bzw. 25 einen Glättungskondensator 13 bzw. 23 auf, durch den Spannungsschwankungen, auch als Rippel bezeichnet, geglättet werden. Diese Spannungsschwankungen können sowohl durch Störungen in den angeschlossenen Anlagen, z.B. Kabelnetz, Freileitungsnetz, usw., erzeugt werden als auch durch die Schaltvorgänge der Brückenschaltungen 10, 20.

Bei dem in Fig. 1 gezeigten Ausführungsbeispiel sind die erste und die zweite Brückenschaltung 10, 20 auf beiden Seiten des Transformators 30 identisch aufgebaut. Jede Brückenschaltung 10 bzw. 20 weist zwei Leistungsmodule 11M, 12M bzw. 21M, 22M auf. Jedes der Leistungsmodule 11M, 12M bzw. 21M, 22M weist zwei seriell miteinander verschaltete Halbleiterschalter 11, 12 bzw. 21, 22 auf. Als Halbleiterschalter können IG-BTs oder MOSFETs verwendet werden. Die Leistungsmodule 11M, 12M bzw. 21M, 22M sind jeweils zwischen den Versorgungspotentialanschlüssen 14 bzw. 24 und Bezugspotentialanschlüssen 15 bzw. 25 der ersten Brückenschaltung 10 bzw. der zweiten Brückenschaltung 20 verschaltet.

Ausgangsanschlüsse 11A, 12A der Leistungsmodule 11M, 12M der ersten Brückenschaltung 10 sind mit einer Primärseite des Transformators 30 verbunden. Sekundärseitige Anschlüsse des Transformators 30 sind mit Eingangsanschlüssen 21E, 22E der Leistungsmodule 21M, 22M der zweiten Brückenschaltung 20 verbunden.

Durch den Transformator 30 sind die beiden Brückenschaltungen 10, 20 und damit die beiden Seiten des Gleichspannungswandlers 1 galvanisch voneinander getrennt. Die galvanische Trennung führt zu Vorteilen bezüglich der Auslegung des Gleichspannungswandlers, zu einer höheren Güte der transformierten Gleichspannung und verhindert die Ausbreitung von Fehlern und Störungen, die in den an die Brückenschaltungen 10, 20 angeschlossenen Anlagen bzw. Komponenten auftreten.

In einer dem Fachmann bekannten Weise ist der Transformator 30 über einen idealen Transformator mit einer Primärwicklung 31, einer Sekundärwicklung 32 und dem Windungsverhältnis n:1 und einer Streuinduktivität 33 nachgebildet. Die Streuinduktivität 33, die in dem elektrischen Ersatzschaltbild der Fig. 1 als separates Bauelement dargestellt ist, ist physikalischer Bestandteil des Transformators.

Zwischen dem Ausgangsanschluss 11A des Leistungsmoduls 11M und der Streuinduktivität 33 ist ein Kondensator 34 bzw. eine Kondensatoranordnung 34 vorgesehen. Durch die Verwendung des seriell zu der Streuinduktivität verschalteten Kondensators 34 kann diese kompensiert werden, wodurch die Halbleiterschaltelemente der Leistungsmodul 11M, 12M weniger Verluste erzeugen und der durch den Transformator 30 fließende Strom einen sinusförmigen Verlauf annimmt. Eine wie in Fig. 1 gezeigte Topologie wird als Serienresonanzwandler bezeichnet und kommt insbesondere im höheren Leistungsbereich zum Einsatz. Bei einem derartigen Serienresonanzwandler wird auch eine Gleichspannungsunterdrückung durch die Verwendung des Kondensators 34 erreicht.

Typischerweise wird der Transformator 30, umfassend die Primärwicklung 31, die Sekundärwicklung 32 sowie die immanent vorhandene Streuinduktivität 33, mit einem isolierenden und wärmeleitenden Kunststoff vergossen. Der Kondensator 34 wird dann als eigenständiges Bauteil verschaltet. Dafür wird eine elektrische Verbindung zwischen einem Wickel der Primärwicklung des Transformators 30 und dem Kondensator 34 mit entsprechender Anschlusstechnik genutzt. Ein Nachteil dieser Vorgehensweise ist, dass ein hoher technischer Aufwand hinsichtlich Material, Gewicht und Volumen daraus resultiert. Darüber hinaus sind die Anschlussverbindungen zwischen dem Kondensator 34 und dem vergossenen Transformator 30 verhältnismäßig lang, sodass aufgrund des Skin-und Proximityeffekts Verluste in den Anschlussleitungen und Anschlüssen entstehen.

Ähnlich aufgebaute Transformatoren sind beispielsweise auch aus den Druckschriften DE 11 2010 005649 T5 oder EP 102480355 A1 bekannt.

Es ist Aufgabe der Erfindung, einen Transformator anzugeben, der baulich und/oder funktional verbessert ist und verringerte Verluste bei hohen Übertragungsfrequenzen aufweist.

Diese Aufgabe wird gelöst durch eine Vorrichtung gemäß den Merkmalen des Patentanspruchs 1. Vorteilhafte Ausgestaltungen ergeben sich aus den abhängigen Patentansprüchen.

Die Erfindung schafft einen Transformator für einen Gleichspannungswandler, insbesondere einen Resonanzwandler. Der Transformator umfasst eine Transformatoreinheit, die zumindest eine Wicklung mit einem ersten Wicklungsanschluss und einem zweiten Wicklungsanschluss umfasst. Sie umfasst ferner eine Kondensatoranordnung aus zumindest einem Kondensator mit einem ersten Kondensatoranordnungsanschluss und einem zweiten Kondensatoranordnungsanschluss. Die Kondensatoranordnung ist an der Transformatoreinheit anliegend angeordnet zur Ausbildung einer Baueinheit. Die Kondensatoranordnungsanschlüsse sind in vorgegebener Weise in Bezug auf die elektrische Verschaltung über ein oder mehrere Verbindungsteile mit den Wicklungsanschlüssen verbunden. Die Kondensatoranordnungsanschlüsse und/oder die Wicklungsanschlüsse sind in vorgegebener Weise in Bezug auf die elektrische Verschaltung mit mehreren zweiten Verbindungsteilen elektrisch verbunden zur Verbindung mit einem ersten und einem zweiten Leistungsmodul.

Die Kondensatoranordnung und die Transformatoreinheit bilden eine Baueinheit, bei der die Kondensatoranordnung quasi in die Transformatoreinheit integriert ist. Dies ermöglicht die Verwendung von z.B. Flachstücken oder Drähten oder Litzen zur Herstellung einer erforderlichen elektrischen Verbindung.

Dadurch können die elektrischen Verbindungen kurz gestaltet sein, was insbesondere bei hohen Übertragungsfrequenzen vorteilhaft ist, da die durch den Skin- und Proximityeffekt entstehenden Verluste klein gehalten werden können. Dadurch wird es zudem ermöglicht, im Bauraum kleinere Keramikkondensatoren zu verwenden. Da die Kondensatoranordnung zusammen mit der Transformatoreinheit eine Baueinheit ausbildet, ist es möglich, die Leistungselektronik in Gestalt der Leistungsmodule direkt neben der Transformatoreinheit anzuordnen, wodurch sich auch die elektrischen Verbindungen zwischen der aktiven und passiven Baugruppe kurz halten lassen. Der erfindungsgemäße Transformator ermöglicht es insbesondere, auch die Leistungsmodule mit Hilfe von, Verluste reduzierenden, Flachstücken elektrisch mit dem Transformator zu verbinden.

Gemäß einer zweckmäßigen Ausgestaltung ist vorgesehen, dass der zumindest eine Kondensator der Kondensatoranordnung auf einem Träger angeordnet ist. Die Anordnung des zumindest einen Kondensators auf einem Träger erleichtert die Anordnung und elektrische Verschaltung der Kondensatoranordnung an der Transformatoreinheit.

Eine weitere zweckmäßige Ausgestaltung sieht vor, dass der Träger eine Leiterzugstruktur erfasst, an die der zumindest eine Kondensator und das oder die ersten Verbindungsteile und die zweiten Verbindungsteile elektrisch angeschlossen sind. Hierdurch wird es ermöglicht, eine beliebige Anzahl an Kondensatoren zunächst auf dem Träger anzuordnen und elektrisch in gewünschter Weise zu verbinden. Die Bauteileinheit, umfassend die Anzahl an Kondensatoren und den Träger, kann dann als Ganzes an der Transformatoreinheit angeordnet werden.

Eine weitere zweckmäßige Ausgestaltung sieht vor, dass in Abhängigkeit der elektrischen Verschaltung ein erster Strompfad über den Träger und ein zweiter Strompfad, der elektrisch getrennt von dem ersten Strompfad ist, hinter dem Träger verläuft. Hierdurch kann die Länge der Strompfade minimiert werden. Darüber hinaus ist es möglich, den Strom nicht über in ihrem Querschnitt begrenzte Leitungen zu führen, sondern diesen flächig zu führen. Dies begünstigt die Minimierung von Verlusten.

Eine weitere zweckmäßige Ausgestaltung sieht vor, dass der oder die ersten Verbindungsteile und/oder die zweiten Verbindungsteile mit dem Träger und/oder den Wicklungsanschlüssen verlötet oder verschraubt oder geklemmt sind. Welche der Kontaktierungsvarianten gewählt wird, kann in Abhängigkeit der Platzverhältnisse und/oder eines gewünschten Übergangswiderstandes bestimmt werden.

Eine weitere zweckmäßige Ausgestaltung sieht vor, dass der zumindest eine Kondensator ein Keramikkondensator ist. Die Verwendung von Keramikkondensatoren bringt den Vorteil mit sich, dass diese gegenüber herkömmlichen Kondensatoren einen geringeren Bauraum beanspruchen. Dies ist insbesondere bei hohen Übertragungsfrequenzen von Vorteil.

Eine weitere zweckmäßige Ausgestaltung sieht vor, dass die Transformatoreinheit ein Gehäuse umfasst, in dem die zumindest eine Wicklung angeordnet ist, wobei der erste und der zweite Wicklungsanschluss aus dem Gehäuse herausgeführt sind. Das Vorsehen eines Gehäuses ermöglicht die Anbringung der Kondensatoranordnung an der Transformatoreinheit. Hierzu kann die Kondensatoranordnung beispielsweise unmittelbar an einer Gehäusewand befestigt werden. Umfasst die Transformatoreinheit eine separate Serieninduktivität, so kann auch diese innerhalb des Gehäuses angeordnet sein.

Es ist weiterhin zweckmäßig, wenn die Kondensatoranordnung an dem Gehäuse anliegend angeordnet ist zur Ausbildung der Baueinheit.

Eine weitere zweckmäßige Ausgestaltung sieht vor, dass die Baueinheit aus der Kondensatoranordnung und der Transformatoreinheit, insbesondere dessen Gehäuse, in einer gemeinsamen Vergussmasse angeordnet sind, wobei die zweiten Verbindungsteile zur Verbindung mit dem ersten und dem zweiten Leistungsmodul aus der Vergussmasse herausragen. Als Vergussmasse kann ein üblicher, isolierender und wärmeleitender Kunststoff genutzt werden. Um die Baueinheit mit der Vergussmasse zu umgeben, kann die Baueinheit aus der Kondensatoranordnung und der Transformatoreinheit in ein weiteres Gehäuse eingebracht werden.

Gemäß einer weiteren zweckmäßigen Ausgestaltung ist vorgesehen, dass die Verbindung zwischen einem Kondensator der Kondensatoranordnung und einem der ersten Verbindungsteile oder einem der zweiten Verbindungsteile durch eine Lötverbindung erfolgt, indem das betreffende Flachstück in eine Nut des Kondensators eingeführt ist bzw. wird, in welcher Kondensatoranschlüsse enden und mit dem betreffenden Verbindungsteil mit Lot verbunden ist oder wird. Diese Ausgestaltung nutzt den Umstand, dass Kondensatoren häufig seitlich angeordnete Laschen mit der genannten Nut aufweisen, welche die Verbindungsteile zur elektrischen Verbindung aufnehmen können. Die Flachstücke können auf einfach Weise, insbesondere von oben und unten, durch das Einbringen von Lot in einen verbleibenden Nutspalt mit entsprechenden Kondensatoranschlüssen verbunden werden. Hierdurch ergibt sich eine einfachere Anbindung der einzelnen Kondensatoren an die Transformatoreinheit.

Gemäß einer weiteren zweckmäßigen Ausgestaltung ist die zumindest eine Wicklung die Primärwicklung oder die Sekundärwicklung des Transformators. Ebenso kann eine jeweilige Kondensatoranordnung sowohl für die Primärwicklung als auch für die Sekundärwicklung vorgesehen sein. Die Kondensatoranordnungen können in dieser Variante z.B. an gegenüberliegenden Stirnseiten des Gehäuses angeordnet sein.

Gemäß einer ersten alternativen Ausgestaltung ist der Gleichspannungswandler ein Serienresonanzwandler, bei dem der erste Wicklungsanschluss mit dem zweiten Kondensatoranordnungsanschluss verbunden ist, und bei dem der zweite Wicklungsanschluss zur Verbindung mit einem zweiten Leistungsmodul und bei dem der erste Kondensatoranordnungsanschluss zur Verbindung mit einem ersten Leitungsmodul ausgebildet ist.

In einer alternativen zweiten Ausgestaltungsvariante ist der Gleichspannungswandler ein Parallelresonanzwandler, bei dem der erste Wicklungsanschluss mit dem ersten Kondensatoranordnungsanschluss und der zweite Wicklungsanschluss mit dem zweiten Kondensatoranordnungsanschluss verbunden sind, und bei dem der erste Wicklungsanschluss zur Verbindung mit einem ersten Leistungsmodul und bei dem der zweite Wicklungsanschluss zur Verbindung mit einem zweiten Leistungsmodul ausgebildet ist.

In einer dem Fachmann bekannten Weise umfasst ein jeweiliges Leistungsmodul eine Halbbrückenschaltung. Wenn von einer Verbindung eines Wicklungsanschlusses mit dem Leistungsmodul die Rede ist, so ist dies in der vorliegenden Beschreibung derart zu verstehen, dass die Verbindung des Wicklungsanschlusses mit dem Ausgang der Halbbrücke, d.h. dem Knotenpunkt der zwei seriell miteinander verschalteten Halbleiterschaltelemente der Halbbrücke, erfolgt.

Die Erfindung wird nachfolgend näher anhand eines Ausführungsbeispiels in der Zeichnung erläutert. Es zeigen:
- Fig. 1: ein elektrisches Ersatzschaltbild eines aus dem Stand der Technik bekannten Gleichspannungswandlers;
- Fig. 2: eine perspektivische, schematische Darstellung eines erfindungsgemäß ausgebildeten Transformators; und
- Fig. 3: eine schematisch vergrößerte Darstellung der Anbindung von Flachstücken an einen im Querschnitt dargestellten Kondensator eines erfindungsgemäßen Transformators.

In der vorliegenden Beschreibung sind gleiche Elemente mit gleichen Bezugszeichen versehen.

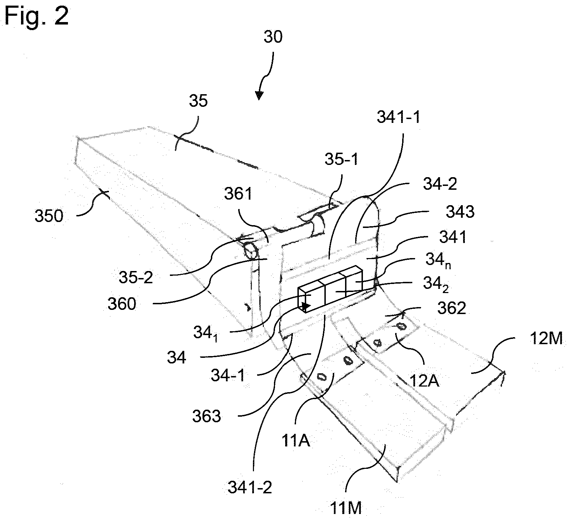

Ein erfindungsgemäß ausgebildeter Transformator, wie er beispielhaft schematisch in einer perspektivischen Darstellung in Fig. 2 gezeigt ist, wird beispielsweise in einem, wie in Fig. 1 gezeigten, Serienresonanzwandler eingesetzt. Der erfindungsgemäße Transformator 30 umfasst eine Transformatoreinheit 35, welcher die einleitend bereits beschriebene Primärspule 31 umfasst. Die Transformatoreinheit 35 umfasst neben der Primärwicklung 31 die Sekundärwicklung 32 und eine im Betrieb auftretende Streuinduktivität 33. In der nachfolgenden Beschreibung wird daher davon ausgegangen, dass die Streuinduktivität 33 Bestandteil der Primärwicklung 31 ist.

Die Transformatoreinheit 35 ist in einem Gehäuse 350, das lediglich beispielhaft einen im Wesentlichen quaderförmigen Aufbau aufweist, angeordnet. Für die weitere Beschreibung der vorliegenden Erfindung ist lediglich die Anbindung der Primärwicklung 31 an die erste Brückenschaltung 10 gemäß Fig. 1 von Bedeutung. Aus diesem Grund wird auf eine Beschreibung der Anbindung der Transformatoreinheit 35 an die zweite Brückenschaltung 20 verzichtet. Die Anbindung der nachfolgend beschriebenen Komponenten könnte jedoch auch alternativ oder zusätzlich an der Sekundärwicklung erfolgen.

Aus der Transformatoreinheit 35 sind Wicklungsanschlüsse 35-1, 35-2, z.B. in Gestalt von Laschen oder Ausleitungsbändern, herausgeführt. Alternativ könnten auch Drähte oder Litzen aus der Transformatoreinheit herausgeführt sein. Der in Fig. 1 gezeigte Kondensator 34, der bei dem erfindungsgemäßen Transformator als Kondensatoranordnung 34 ausgestaltet ist, welcher zumindest einen Kondensator umfasst, wird gemäß dem in Fig. 1 gezeigten elektrischen Ersatzschaltbild an die Transformatoreinheit 35 sowie die erste Brückenschaltung 10 angeschlossen. Die Kondensatoranordnung 34 umfasst zu diesem Zweck einen ersten Kondensatoranordnungsanschluss 34-1, der zur Verbindung mit dem Ausgang 11A des Leistungsmoduls 11M der ersten Brückenschaltung 10 vorgesehen und in Fig. 2 mit diesem verbunden ist. Ein zweiter Kondensatoranordnungsanschluss 34-2 ist zur Verbindung mit dem ersten Wicklungsanschluss 35-1 vorgesehen und mit diesem verbunden.

Nachfolgend wird die mechanische Integration der Kondensatoranordnung 34 an bzw. in die Transformatoreinheit 35 beschrieben.

Die Kondensatoranordnung 34 umfasst in dem in Fig. 2 gezeigten Ausführungsbeispiel n nebeneinander auf einem Träger 341 aufgebrachte Einzelkondensatoren 34₁, 34₂ und 34ₙ. Bei den Einzelkondensatoren 34ᵢ, wobei i = 1...n ist, handelt es sich bevorzugt um Keramikkondensatoren. Die Anzahl n ist im vorliegenden Ausführungsbeispiel n = 3 gewählt. Grundsätzlich kann die Anzahl n in Abhängigkeit der zu erzielenden Kapazität gewählt werden. Dies bedeutet, n kann n ≥ 1 gewählt sein.

Der Träger 341, beispielsweise eine Platine aus FR4, ist mit einer in der Figur nicht näher erkennbaren Leiterzugstruktur versehen, über welche die Anzahl n an Einzelkondensatoren 34ᵢ elektrisch miteinander verbunden ist. Die Mehrzahl an Einzelkondensatoren 34ᵢ kann seriell und/oder parallel miteinander verschaltet sein.

Der Träger 341 mit der Kondensatoranordnung 34 bildet eine vorgefertigte Baueinheit, die im Ausführungsbeispiel an einer vorderen Stirnseite des Gehäuses 350 der Transformatoreinheit 35 angeordnet ist. Die mechanische Befestigung des Trägers 341 an dem Gehäuse 350 kann auf beliebige Weise mittels Klammern, Verschrauben, stoffschlüssiger Verbindung und dergleichen erfolgen.

Der Träger 341 ist im Bereich einer, in der Figur oberen Längsseite 341-1 über ein erstes Flachstück 343 elektrisch mit dem ersten Wicklungsanschluss 35-1 der Transformatoreinheit 35 verbunden. Dazu kann das erste Flachstück 343 derart ausgestaltet sein, dass sich dieses in dem an den Träger 341 angrenzenden Bereich vollständig über die Länge der oberen Längsseite 341-1 erstreckt. Dem gegenüber weist das erste Flachstück 343 in dem, dem ersten Wicklungsanschluss 35-1 zugewandten Bereich in etwa nur die halbe Breite der Längsseite des Trägers 341 auf, um einerseits flächig mit dem ersten Wicklungsanschluss 35-1 verbunden werden zu können und andererseits nicht in den Bereich des zweiten Wicklungsanschlusses 35-2 zu ragen.

Im Bereich einer unteren Längsseite 341-2 ist der Träger 341 über ein zweites Flachstück 363 mit dem Ausgangsanschluss 11A des ersten Leistungsmoduls 11M verbunden. Dabei kann das zweite Flachstück 363 in dem an den Träger 341 angrenzenden Bereich sich optional über die gesamte Länge der unteren Längsseite 341-2 erstrecken.

Der Ausgang 12A des Leistungsmoduls 12M ist über ein weiteres zweites Flachstück 360 mit dem zweiten Wicklungsanschluss 35-2 der Transformatoreinheit 35 verbunden. Das zweite Flachstück 360 erstreckt sich dazu zwischen der stirnseitigen Wand des Gehäuses 350 der Transformatoreinheit 35 und der Rückseite des Trägers 341. Eine erste Anschlusslasche 361 des zweiten Flachstücks 360 ist mit dem zweiten Wicklungsanschluss 35-2 verbunden. Eine zweite Anschlusslasche 362 des zweiten Flachstücks 360 ist mit dem Ausgangsanschluss 12A des Leistungsmoduls 12M verbunden.

Die elektrische Verbindung der Flachstücke mit den jeweiligen Wicklungsanschlüssen 35-1, 35-2 sowie den Ausgangsanschlüssen 11A, 12A kann wahlweise durch Schrauben, Klemmen, Löten und dergleichen erfolgen.

Es versteht sich, dass zwischen dem zweiten Flachstück 360 und dem Träger 341 eine elektrische Isolation vorgesehen ist. Die elektrische Isolation kann durch das Material des Trägers 341 auf dessen Rückseite oder eine zusätzlich vorgesehene Isolationsschicht realisiert sein. Eine solche Isolationsschicht kann wahlweise fest mit der Rückseite des Trägers 341 oder lose zwischen dem Träger 341 und dem zweiten Flachstück 360 eingefügt sein.

Fig. 2 zeigt die Anwendung des erfindungsgemäßen Transformators 30 an die Leistungsmodule 11M, 12M der ersten Brückenschaltung 10. Nicht dargestellt ist ein die Einheit aus Transformatoreinheit 35 und der Baueinheit aus Träger 341 und Kondensatoranordnung 34 umgebender Verguss, z.B. aus einem isolierendem und wärmeleitenden Kunststoff. Diese Baueinheit kann insbesondere in einem ebenfalls nicht dargestellten Gehäuse angeordnet sein, sodass lediglich das zweite Flachstück 363 und die zweite Anschlusslasche 362 des zweiten Flachstücks 360 aus diesem Verguss herausragen, um dann in der dargestellten Weise mit den Leistungsmodulen 11M, 12M verbunden zu werden.

Eine solche Baueinheit aus Kondensatoranordnung 34 (einschließlich des Trägers 341)und Transformatoreinheit 35 stellt damit einen Transformator 30 dar, bei der die Kondensatoranordnung 34 in die Transformatoreinheit 35 integriert ist. Werden für die Kondensatoranordnung 34 im Bauraum kleine Keramikkondensatoren verwendet, ist eine Nutzung bei hohen Übertragungsfrequenzen von Vorteil, da nur geringe Verluste entstehen.

Da die Kondensatoranordnung 34 in die Transformatoreinheit 35 integriert ist, können die Leistungsmodule 11M, 12M direkt neben dem Transformator 30 angeordnet werden. Dadurch lässt sich die elektrische Verbindung zwischen aktiven und passiven Komponenten zu kurz wie möglich halten.

In einem anderen, nicht dargestellten Ausführungsbeispiel können die Wicklungsanschlüsse 35-1, 35-2 auch hintereinander angeordnet sein, so dass sie sich über die gesamte Breite der Stirnseite der Transformatoreinheit erstrecken können (aber nicht müssen). Die Flachstücke 343 und 360 erstrecken sich dann auch im Bereich der Wicklungsanschlüsse 35-1, 35-2 hinter- bzw. übereinander, wobei dazwischen eine elektrische Isolation vorgesehen ist.

Auch Kombinationen der beiden Varianten sind möglich.

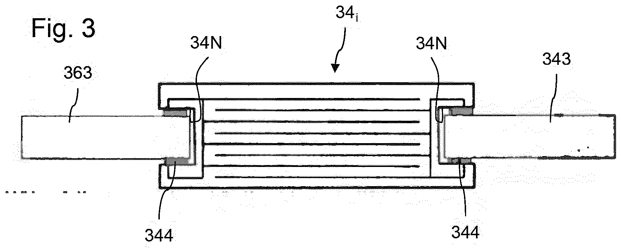

In der in Fig. 2 gezeigten Ausgestaltungsvariante sind die Einzelkondensatoren 34ᵢ der Kondensatoranordnung 34 auf dem Träger 341 angeordnet. Dies ist nicht zwingend notwendig. So könnten insbesondere die Einzelkondensatoren 34ᵢ der Kondensatoranordnung 34 auch direkt durch die an sie herangeführten Flachstücke kontaktiert werden. Dies kann beispielsweise in der in Fig. 3 gezeigten Weise erfolgen, bei der das Vorhandensein von Nuten 34N auf gegenüberliegenden Seiten der Einzelkondensatoren 34ᵢ vorgesehen ist. In den Bereich der Nuten 34N ragen entsprechende elektrische Anschlüsse der Kondensatoren 34ᵢ. Das erste Flachstück 343 und das zweite Flachstück 363 können in die Nuten 34N eingeführt werden und von oben und unten mit Lot 344 elektrisch mit den Anschlüssen des Kondensators verbunden werden.

In den vorangegangen Ausführungsbeispielen wurden als Verbindungsteile Flachstücke beschrieben. Diese können teilweise oder vollständig durch Drähte oder Litzen ersetzt werden.

Die im vorliegenden Ausführungsbeispiel exemplarisch beschriebene Integration der Kondensatoranordnung in die Transformatoreinheit kann auch bei mehrphasigen Transformatoren und Resonanzkreisen wie LLC-Wandlern erfolgen.

Darüber hinaus kann das vorgeschlagene Vorgehen nicht nur bei einem Serienresonanzwandler, sondern auch bei einem Parallelresonanzwandler, bei dem die Kondensatoranordnung parallel zu der Wicklung 31 angeordnet ist, angewendet werden.

Der vorgeschlagene Transformator weist den Vorteil eines geringeren Aufwands für Anschluss- und Verbindungstechnik zwischen einer Wicklung (im Beispiel der Primärwicklung) und dem Serienresonanzkreis sowie zu den Leistungsmodulen auf. Es sind höhere Übertragungsfrequenzen möglich. Der Transformator weist ein geringeres Volumen und Gewicht des Resonanzkreises auf. Es treten weniger Verluste auf. Es ist eine einfache thermische Anbindung der Kondensatoranordnung möglich.

## Patentansprüche

1. Vorrichtung (30, 34, 35) für einen Gleichspannungswandler, umfassend:
- einen Transformator (30), der zumindest eine Wicklung (31, 33) mit einem ersten Wicklungsanschluss (35-1) und einem zweiten Wicklungsanschluss (35-2) umfasst,
- eine Transformatoreinheit (35), umfassend ein Gehäuse (350), in dem der Transformator mit der zumindest eine Wicklung (31, 33) angeordnet ist, wobei der erste und der zweite Wicklungsanschluss (35-1; 35-2) aus dem Gehäuse (350) herausgeführt sind,
- eine Kondensatoranordnung (34) aus zumindest einem Kondensator (34ᵢ) mit einem ersten Kondensatoranordnungsanschluss (34-1) und einem zweiten Kondensatoranordnungsanschluss (34-2);
wobei
- die Kondensatoranordnung (34) an dem Gehäuse (350) der Transformatoreinheit (35) anliegend angeordnet ist zur Ausbildung der Vorrichtung (30, 34, 35), wobei
- der zweite Kondensatoranordnungsanschluss (34-2)beziehungsweise die zweiten Kondensatoranordnungsanschlüsse (34-2) über ein oder mehrere erste Verbindungsteile (343) mit dem ersten Wicklungsanschluss (35-1) verbunden ist oder sind;
- der erste Kondensatoranordnungsanschluss beziehungsweise die ersten Kondensatoranordnungsanschlüsse (34-1) und/oder der zweite Wicklungsanschluss (35-2) mit einem oder mehreren zweiten Verbindungsteilen (360; 363) elektrisch verbunden ist oder sind und die zweiten Verbindungsteile mit einem ersten und einem zweiten Leistungsmodul (11M; 12M) eines Gleichspannungswandlers verbindbar sind.

2. Vorrichtung nach Anspruch 1,
**dadurch gekennzeichnet, dass** der zumindest eine Kondensator (34ᵢ) der Kondensatoranordnung (34) auf einem Träger (341) angeordnet ist.

3. Vorrichtung nach Anspruch 2,
**dadurch gekennzeichnet, dass** der Träger (341) eine Leiterzugstruktur umfasst, an die der zumindest eine Kondensator (34ᵢ) und das oder die ersten Verbindungsteile (343) und die zweiten Verbindungsteile (360; 363) elektrisch angeschlossen sind.

4. Vorrichtung nach Anspruch 2 oder 3,
**dadurch gekennzeichnet, dass** in Abhängigkeit der elektrischen Verschaltung ein erster Strompfad über den Träger (341) und ein zweiter Strompfad, der elektrisch getrennt von dem ersten Strompfad ist, hinter dem Träger (341) verläuft.

5. Vorrichtung nach einem der Ansprüche 2 bis 4,
**dadurch gekennzeichnet, dass** der oder die ersten Verbindungsteile (343) und/oder die zweiten Verbindungsteile (360; 363) mit dem Träger (341) und/oder den Wicklungsanschlüssen (35-1; 35-2) verlötet oder verschraubt oder geklemmt sind.

6. Vorrichtung nach einem der vorhergehenden Ansprüche, **dadurch gekennzeichnet, dass** der zumindest eine Kondensator (34ᵢ) ein Keramikkondensator ist.

7. Vorrichtung nach Anspruch 1,
**dadurch gekennzeichnet, dass** die Baueinheit aus der Kondensatoranordnung (34) und der Transformatoreinheit (35), insbesondere dessen Gehäuse (350), in einer gemeinsamen Vergussmasse angeordnet sind, wobei die zweiten Verbindungsteile (360; 360) zur Verbindung mit dem ersten und dem zweiten Leistungsmodul (11M; 12M) aus der Vergussmasse herausragen.

8. Vorrichtung nach einem der vorhergehenden Ansprüche, **dadurch gekennzeichnet, dass** die Verbindung zwischen einem Kondensator (34ᵢ) der Kondensatoranordnung (34) und einem der ersten Verbindungsteile (343) oder einem der zweiten (360, 363) Verbindungsteile durch eine Lötverbindung erfolgt, indem das betreffende Flachstück in eine Nut (34N) des Kondensators (34ᵢ) eingeführt sind, in welcher Kondensatoranschlüsse enden und mit dem betreffenden Verbindungsteil mit Lot (344) verbunden sind/ist.

9. Vorrichtung nach einem der vorhergehenden Ansprüche, **dadurch gekennzeichnet, dass** die zumindest eine Wicklung (31, 35) die Primärwicklung (31) und/oder die Sekundärwicklung des Transformators (30) ist.

10. Vorrichtung nach einem der vorhergehenden Ansprüche, **dadurch gekennzeichnet, dass** das oder die Verbindungsteile (343; 360, 363) Flachstücke und/oder Drähte und/oder Litzen sind.

## Claims

1. Device (30, 34, 35) for a DC/DC voltage converter, comprising:
- a transformer (30) that comprises at least one winding (31, 33) having a first winding terminal (35-1) and a second winding terminal (35-2),
- a transformer unit (35), comprising a housing (350) in which the transformer with the at least one winding (31, 33) is arranged, wherein the first and the second winding terminal (35-1; 35-2) are routed out of the housing (350),
- a capacitor arrangement (34) consisting of at least one capacitor (34ᵢ) having a first capacitor arrangement terminal (34-1) and a second capacitor arrangement terminal (34-2);
wherein
- the capacitor arrangement (34) is arranged so as to bear on the housing (350) of the transformer unit (35) so as to form the device (30, 34, 35), wherein
- the second capacitor arrangement terminal (34-2) or the second capacitor arrangement terminals (34-2) is or are connected to the first winding terminal (35-1) by way of one or more first connecting parts (343);
- the first capacitor arrangement terminal or the first capacitor arrangement terminals (34-1) and/or the second winding terminal (35-2) is or are electrically connected to one or more second connecting parts (360; 363) and the second connecting parts are able to be connected to a first and a second power module (11M; 12M) of a DC/DC voltage converter.

2. Device according to Claim 1,
**characterized in that** the at least one capacitor (34ᵢ) of the capacitor arrangement (34) is arranged on a carrier (341).

3. Device according to Claim 2,
**characterized in that** the carrier (341) comprises a conductor track structure to which the at least one capacitor (34ᵢ) and the first connecting part or parts (343) and the second connecting parts (360; 363) are electrically connected.

4. Device according to Claim 2 or 3,
**characterized in that** a first current path runs over the carrier (341) and a second current path that is electrically separate from the first current path runs behind the carrier (341), depending on the electrical connection.

5. Device according to one of Claims 2 to 4,
**characterized in that** the first connecting part or parts (343) and/or the second connecting parts (360; 363) are soldered or screwed or clamped to the carrier (341) and/or the winding terminals (35-1; 35-2).

6. Device according to one of the preceding claims,
**characterized in that** the at least one capacitor (34ᵢ) is a ceramic capacitor.

7. Device according to Claim 1,
**characterized in that** the structural unit consisting of the capacitor arrangement (34) and the transformer unit (35), in particular its housing (350), is arranged in a common casting compound, wherein the second connecting parts (360; 360) protrude out of the casting compound for connection to the first and the second power module (11M; 12M).

8. Device according to one of the preceding claims,
**characterized in that** the connection between a capacitor (34ᵢ) of the capacitor arrangement (34) and one of the first connecting parts (343) or one of the second connecting parts (360, 363) is created by a solder connection by inserting the flat part in question into a groove (34N) of the capacitor (34ᵢ) in which capacitor terminals end and by connecting it/them to the connecting part in question with solder (344).

9. Device according to one of the preceding claims, **characterized in that** the at least one winding (31, 35) is the primary winding (31) and/or the secondary winding of the transformer (30).

10. Device according to one of the preceding claims, **characterized in that** the connecting part or parts (343; 360, 363) are flat parts and/or wires and/or stranded wires.

## Revendications

1. Dispositif (30, 34, 35) destiné à un convertisseur continu-continu, comportant :
- un transformateur (30) comportant au moins un enroulement (31, 33) avec un premier raccordement d'enroulement (35-1) et un second raccordement d'enroulement (35-2),
- une unité transformateur (35) comportant un boîtier (350) abritant le transformateur avec l'au moins un enroulement (31, 33), les premier et second raccordements d'enroulement (35-1 ; 35-2) sortant du boîtier (350),
- un ensemble transformateur (34) constitué par au moins un condensateur (34i) avec un premier raccordement d'ensemble condensateur (34-1) et un second raccordement d'ensemble condensateur (34-2) ;
- la disposition de l'ensemble condensateur (34) étant prévu de telle sorte que ce dernier se serre contre le boîtier (350) de l'unité transformateur (35) pour constituer le dispositif (30, 34, 35),
- le second raccordement d'ensemble condensateur (34-2) respectivement les seconds raccordements d'ensemble condensateur (34-2) étant relié(s) au premier raccordement d'enroulement (35-1) via un ou plusieurs éléments de raccord (343) ;
- le premier raccordement d'ensemble condensateur respectivement les premiers raccordements d'ensemble condensateur (34-1) et/ou le second raccordement d'enroulement (35-2) étant électriquement relié(s) à un ou plusieurs seconds éléments de raccord (360 ; 363) et les seconds éléments de raccord étant susceptibles d'être reliés à un premier et à un second module de puissance (11M ; 12M) d'un convertisseur continu-continu.

2. Dispositif selon la revendication 1, **caractérisé en ce que** l'au moins un condensateur (34ᵢ) de l'ensemble condensateur (34) est disposé sur un support (341).

3. Dispositif selon la revendication 2, **caractérisé en ce que** le support (341) comporte une structure de piste de conducteur à laquelle sont reliés électriquement l'au moins un condensateur (34ᵢ) et le premier élément ou les premiers éléments de raccord (343) et les seconds éléments de raccord (360 ; 363).

4. Dispositif selon la revendication 2 ou 3, **caractérisé en ce que**, en fonction du câblage électrique, un premier chemin courant passe par le support (341) et un second chemin courant électriquement séparé du premier chemin courant passe derrière le support (341).

5. Dispositif selon l'une des revendications 2 à 4, **caractérisé en ce que** le(s) premier(s) élément(s) de raccord (343) et/ou les seconds éléments de raccord (360 ; 363) est/sont soudé(s) ou vissé(s) ou serré(s) au support (341) et / ou aux raccordements d'enroulement (35-1 ; 35-2).

6. Dispositif selon l'une des revendications précédentes, **caractérisé en ce que** l'au moins un condensateur (34i) est un condensateur céramique.

7. Dispositif selon la revendication 1, **caractérisé en ce que** l'unité constituée par l'ensemble condensateur (34) et l'unité transformateur (35), notamment son boîtier (350), sont scellés dans une masse coulée commune, les seconds éléments de raccord (360 ; 360) faisant saillie de la masse coulée pour être reliés aux premier et seconds modules de puissance (11M ; 12M).

8. Dispositif selon l'une des revendications précédentes, **caractérisé en ce que** la liaison entre un condensateur (34i) de l'ensemble condensateur (34) et l'un des premiers éléments de raccord (343) ou l'un des seconds éléments de raccord (360, 363) se fait par une brasure, la pièce plate étant insérée dans une rainure (34N) du condensateur (34i) dans laquelle des raccords du condensateur se terminent et sont reliés à l'élément de raccord correspondant par brasure (344).

9. Dispositif selon l'une des revendications précédentes, **caractérisé en ce que** l'au moins un enroulement (31, 35) constitue l'enroulement primaire (31) et/ou l'enroulement secondaire du transformateur (30).

10. Dispositif selon l'une des revendications précédentes, **caractérisé en ce que** l'élément de raccord ou les éléments de raccord (343 ; 360, 363) est/sont des pièces plates et/ou des fils et/ou des torons.
